# EUROPEAN PATENT SPECIFICATION

(11) **EP 2 197 666 B1**
(45) Date of publication and mention of the grant of the patent: **05.04.2017**
(21) Application number: 08806522.2
(22) Date of filing: 06.10.2008
(51) Int. Cl.: B32B 5/10, B32B 27/12, B32B 5/18, B29C 44/12

(54) **COMPOSITE LAMINATED ARTICLE AND MANUFACTURE THEREOF**
LAMINIERTER VERBUNDARTIKEL UND DESSEN HERSTELLUNG
ARTICLE STRATIFIÉ COMPOSITE ET SA FABRICATION

(30) Priority: 08.10.2007 GB 0719619
(43) Date of publication of application: 23.06.2010
(73) Proprietor: Gurit (UK) Ltd., Newport Isle of Wight PO30 5WU (GB)
(72) Inventor: JONES, Daniel, Thomas, Cowes, Isle of Wight PO31 7FG (GB)
(74) Representative: Jenkins, Peter David
(86) International application number: PCT/GB2008/003382
(87) International publication number: WO 2009/047487

(56) References cited:
- EP-A- 0 623 491
- EP-A- 1 859 927
- WO-A-02/09934
- US-A1- 2005 027 025
- US-A1- 2007 020 447

## Description

The present invention relates to a composite laminated article and to a method of making a composite laminated article. In particular, the present invention relates to composite laminated articles suitable for use in manufacturing large structures such as, for example, wind turbine blades and boat hulls, decks and bulkheads.

Some fibre reinforced composite components comprise an inner rigid foam core sandwiched between outer layers of fibre reinforced composite material. Foam cores are used extensively in the manufacture of fibre reinforced plastic parts to increase the rigidity of the finished article by separating two fibre-reinforced layers, acting as structural skins, with a low-density core material, acting as a structural core. The fibre-reinforced layers are bonded to the low-density core material by a layer of resin material. This construction is commonly called a sandwich panel in the composite industry.

The primary functions of a structural core are to increase panel rigidity, by reducing the overall deflection under load and onset of global panel buckling, and to prevent skin wrinkling and localised buckling.

It is often desired to maximise the mechanical properties of the foam for a given density to enable the lightest weight core to be selected to transfer the structural loads between the fibre reinforced layers. The foam must also be compatible with the materials and manufacturing process used to make structural composite skins.

There is a general need to reduce both construction cost and component weight of composite laminated articles. When a fibre reinforced layer is to be bonded to a core layer it is necessary to provide sufficient resin in the fibre reinforced layer to enable complete bonding to the core layer. There is a need in the art for foam cores that can be securely and reliably bonded to fibre reinforced layers over the interface therebetween that permits a minimum amount of resin to be required for such bonding, in order to minimise the weight and material cost for achieving a given structural performance providing particular mechanical properties.

Furthermore, the size of foam core pieces is limited by both the foam manufacturing process and the handleability of the foam pieces, in order for operators to be able to fit the foam into the mould being used to form the composite component. It is increasingly common for a foam core to be supplied pre-machined to speed up assembly. These foam kits can be made into a jigsaw of foam parts with self assembly features, such as dog bones or serrated edges, to speed up the assembly within the mould and to provide correct positioning of the core into a complex moulding. Depending on the complexity of the core, the machining can lead to considerable amounts of foam material being wasted.

There is a general need to reduce the amount of foam core material being wasted in the manufacture of composite laminated articles.

Low density structural foams (having a density of from 50-600g/L) currently used in the composite industry that have the highest mechanical and thermal performance are crosslinked polyvinyl chloride (PVC) foam, styrene acrylonitrile (SAN) foam, and polymethacrylimide (PMI) foam. When the outer layers of fibre reinforced composite material are preset as pre-pregs, these foams are suitable for high temperature pre-preg processing at temperatures from 75-160°C, depending on the foam type, in which processing the foam should resist at least 1 bar vacuum pressure for extended periods of time during the pre-preg cure. Other such known foams can be used for lower temperature applications at processing temperatures of from 20-75°C, for example using resin infusion processing, which is known in the art for the manufacture of articles such as boat hulls, decks and bulkheads.

These known foams are made from batch processes and are both time consuming and expensive to produce. These foams have varying degrees of cross-linking making them more difficult to recycle as they cannot be re-melt processed, unlike a true 100% thermoplastic material.

Pre-expanded polystyrene (PS), known in the art as EPS, is commonly used to manufacture low density, low cost foam blocks and moulded parts. It has limited historical use as a structural core in the composite industry, because the polystyrene foam has a low heat resistance and low mechanical properties. Polystyrene cores have been used with epoxy room temperature curing laminating resins but are not suitable for use with polyester and vinyl ester resins, because the styrene used in the resin material attacks and dissolves the polystyrene foam.

The use of EPS for resin infusion and injection processes (VARTM) has not been successful because commercially available EPS grades are relatively porous and the foam absorbs large amounts of resin during the injection process. The resins designed for infusion processes are generally low in viscosity and may contain diluents. In addition, it has been found that some epoxy resins attack and soften EPS during the resin infusion (VARTM) processing. This is due to the combination of the exothermic heat of reaction from the curing epoxy resin, which raises the temperature of the foam, and the low chemical resistance and high porosity of the foam. Usually epoxy resins are selected for demanding applications and a higher performance core is usually preferred to minimise the final component weight.

It is known to add polyphenylene oxide (PPO), also known as polyphenylene ether (PPE), to polystyrene to provide a higher temperature-resistant material with higher mechanical properties. Unusually for thermoplastics, the PPO is miscible and compatible with polystyrene (PS). This compatibility gives the mixed PS/PPO a range of properties, generally the property being related to or proportional to the amount of the material present by a rule of mixtures average of the two polymer properties. The more expensive PPE (PPO) increases the glass transition temperature (Tg), strength and modulus of the blend. This is a key feature as in less compatible polymer blends the material would still show some softening at the temperature of the lowest thermal resistant component. This gives a cost effective higher temperature, tough thermoplastic.

PS/PPO is used for manufacturing some industrial and household plastic goods requiring higher heat resistance. The amount of PPO added is proportional to the improvement in Tg and mechanical properties. The compatibility of PS/PPO is known, and has been marketed commercially, for example by GE Plastics as Noryl ®.

PPO/PS is currently commercially available as an unexpanded bead containing a residual amount of a blowing agent, in particular pentane, for producing low density foams (less than 100g/L) via an expanded polystyrene (EPS) type process. The main use of PPO/PS has been in low density (less than 100g/L) insulation applications where additional thermal resistance is required such as the first part of the thermal insulation on a hot-water boiler tank. PPO/PS is also used to manufacture high impact performance cycle helmets due to its higher mechanical properties.

EPS/PPO foams are niche products and not well known in the packaging and construction markets. More utilised and marketed are higher impact performance foams such as EPE (Expanded Polyethylene) and EPP (Expanded Polypropylene). These polymers are not ideal for use as a structural core for epoxy composite laminates as they are difficult to bond to, have low modulus and poor thermal resistance showing early softening and creep before their Tg. A useful characteristic of EPS/PPO blends is the retention of modulus close to its Tg value leading to little creep and softening deflection under load.

There is a general need to produce composite laminated articles comprising a foam core having high mechanical properties, and high thermal properties, that can be readily produced at low cost and using conventional composite manufacturing processes.

According to a first aspect of the present invention there is provided a composite laminated article comprising: a first layer of a closed cell foam of a thermoplastic material, and a second layer of a fibre-reinforced resin, the resin adhering a surface of the second layer to a surface of the first layer, wherein the closed cell foam has an average cell size, the cell size being substantially homogeneous in the closed cell foam, of less than 100 microns.

In this specification, the cell sizes are measured as a cell diameter when viewed as a planar section through the closed cell foam.

Preferably, the closed cell foam has an average cell size of from 15 to 75 microns, more preferably from 25 to 50 microns. A particularly preferred foam has an average cell size of about 36 microns.

In its broadest aspects, the present invention employs a closed cell foam within a fibre reinforced epoxy composite structure, typically a sandwich structure, the foam having been made either by direct extrusion or more preferably using a pre-expanded foam and moulding process.

Accordingly, preferably, the closed cell foam comprises a plurality of expanded beads mutually bonded together, each bead comprising a plurality of closed cells.

More preferably, the beads are pre-expanded beads which have an average bead size of from 2 to 4 mm.

This aspect of the present invention is predicated on the finding by the present inventors that closed cell foams can limit the amount of resin that is absorbed by the cells of the foam when a foam body is used as a core layer in a fibre-reinforced composite material. By minimising the amount of resin required to bond the fibre-reinforcement to the foam surface and fill, by absorption into, any open surface cells of the foam surface, the panel weight can be further lowered. This reduction in resin absorption can be achieved even though the closed cell foam can consist of body of expanded beads, each bead including a plurality of closed cells. The bead interfaces can be sufficiently well fused so as not cause significant resin absorption for such a closed cell foam structure. By providing that the closed cells have an average dimension of less than 100 microns the resin absorption can be minimised while ensuring sufficient mutual adhesion between the fibre-reinforced outer layer and the foam core layer to give high mechanical properties for the sandwich composite.

The foam used in accordance with the present invention is compatible with the materials and manufacturing process used to make structural composite skins and has a closed cell construction so as not to absorb excess resin which would otherwise cause an increase in the weight of the final panel.

When the closed cell foam comprises a plurality of expanded beads mutually welded together, each bead comprising a plurality of closed cells, preferably in each bead the closed cell foam has an average cell size of from 15 to 75 microns, at least 50% of the beads comprise first beads having a uniform cell size in which the maximum cell size is 100 microns and at most 50% of the beads comprise second beads having a non-uniform cell size in which the majority of cells have a maximum cell size of 100 microns and a minority of cells have a maximum cell size from more than 100 microns to up to 660 microns.

Preferably, the closed cell foam comprises at least 66% of the first beads and at most 34% of the second beads.

Preferably, in the second beads the minority of cells have a maximum cell size from more than 100 microns to up to 440 microns.

Typically, the second beads contain an average of less than 5 cells that have a cell size from more than 100 microns to up to 660 microns. More preferably, the second beads contain an average of about 2 cells that have a cell size from more than 100 microns to up to 660 microns.

Yet more preferably, the number of weld defects, defined as a void between adjacent weld surfaces, is less than 0.25 per bead. In other words, preferably at least at least 75% of the beads are fully welded around their periphery to a plurality of adjacent beads. More preferably, the number of weld defects is less than 0.15 per bead, or in other words, more preferably at least at least 85% of the beads are fully welded around their periphery to a plurality of adjacent beads.

Ideally, the homogeneity of the closed cell foam is such that both the closed cell size distribution and the bead weld uniformity are sufficiently homogeneous that the level of defects, expressed an enlarged cells and/or weld defects, embodied as interbead voids, is very low. This can surprisingly yield not only low resin absorption and good mechanical properties, but also can be achieved using foam densities and bead sizes that are within ranges typically present for foams used to manufacture composite materials.

The present inventors have particularly found that the homogeneity of the closed cell foam, both with respect to the cell size, and with respect to the welding between adjacent bead surfaces, is an important parameter that can achieve not only low resin absorption but also good mechanical properties. In a preferred embodiment, the majority of the cells forming these beads are fine in structure, typically less than 100 microns in diameter and on average about 36 microns in diameter. The foam is homogonous with occasional larger cells present within beads. Typically less than half of the beads in a planar section will contain larger cells, but more typically only about one third of the beads in a planar section contain these larger cells. These larger cells are on average 200 to 440 microns in diameter. On average the beads that contain the larger cells have less than 5, and typically about 2, large cells visible within the bead when viewing a planar section through the foam. The beads are well fused together to minimise the size and number of welding defects between the beads.

The closed cell foam may be composed of a blend of polystyrene and polyphenylene oxide (PS/PPO), and the PS/PPO closed cell foam preferably has a density of from 50 to 250 g/litre.

Preferably, the fibre-reinforced resin includes a thermoset resin, such as an epoxy resin.

Suitable epoxy resins include diglycidyl ethers of bisphenol A, diglycidyl ethers of bisphenol F, epoxy novolac resins and N-glycidyl ethers, glycidyl esters, aliphatic and cycloaliphatic glycidyl ethers, glycidyl ethers of aminophenols, glycidyl ethers of any substituted phenols and blends thereof. Also included are modified blends of the aforementioned thermosetting polymers. These polymers can also be modified by rubber or thermoplastic addition or by reactive or non reactive diluents and other modifiers. Reactive diluents such as mono and di-functional glycidyl esters may be used or non reactive diluents such as nonyl phenol, furfural alcohol, and dibutyl phthalatem, polymethyl acetal to lower the viscosity of the resin. Any suitable curing agent or catalyst may be used.

The curing agent or catalyst will be selected to correspond to the resin used. Suitable curing agents are polyamides, polysulfides, mercaptan, aliphatic amines, amidoamines, aromatic amines, anhydride. One suitable latent catalyst for use with an epoxy resin is a dicyandiamide curing agent. The catalyst may be accelerated. Where a dicyandiamide catalyst is used, a substituted urea may be used as an accelerator. Suitable accelerators include Diuron, Monuron, Fenuron, Chlortoluron, bis-urea of toluenedlisocyanate and other substituted homologues. The epoxy curing agent may be selected from Dapsone (DDS), Diamino-diphenyl methane (DDM), BF3-amine complex, substituted imidazoles, accelerated anhydrides, metaphenylene diamine, diaminodiphenylether, aromatic polyetheramines, aliphatic amine adducts, aliphatic amine salts, aromatic amine adducts and aromatic amine salts. Amine and anhydride curing agents are preferred for room temperature low viscosity resin infusible systems and dicyandiamide catalyst and accelerator are preferred for pre-preg / SPRINT cure systems requiring an elevated curing temperature.

The resin can be provided with a toughening agent. Suitable toughening agents can be selected from liquid rubber (such as acrylate rubbers, or carboxyl-tenninated acrylonitrile rubber), solid rubber (such as solid nitrite rubber, or core-shell rubbers), thermoplastics (such as poly (EtherSulphone), poly (Imide)), block copolymers (such as styrene-butadiene-methacrylate triblocks), or blends thereof.

The fibrous-reinforcement layer comprises fibrous material such as glass fibre, aramid, PAN or carbon fibre, or natural fibres such as hemp, flax or jute.

According to a second aspect of the present invention there is provided a method of making a composite laminated article, the method comprising the steps of: (a) providing a first layer of a closed cell foam of a thennoplastic material, wherein the closed cell foam has an average cell size, the cell size being substantially homogenous in the closed cell foam, of less than 100 microns, preferably from 15 to 75 microns; (b) disposing a second layer including fibre-reinforcment adjacent to the first layer; and (c) adhering a surface of the second layer to a surface of the first layer by a resin, the resin comprising a resin matrix of a fibre-reinforced layer comprising the fibre-reinforcment and the resin matrix.

In one embodiment, in step (c) the resin is infused into the fibre-reinforcement of the second layer and into an interface between the first and second layers. Preferably, the first layer comprises a plurality of channels in the surface of the first layer at the interface between the first and second layers along which channels the infused resin flows in step (c).

In another embodiment, the second layer is a pre-preg and the resin is present in the second layer.

Preferably, the closed cell foam comprises a plurality of expanded beads mutually bonded together, each bead comprising a plurality of closed cells. The beads may be pre-expanded beads which have an average bead size of from 2 to 4 mm. The closed cell foam is preferably composed of a blend of polystyrene and polyphenylene oxide (PS/PPO), and preferably the PS/PPO closed cell foam has a density of from 50 to 250 g/litre.

There is also disclosed herein a composite laminated article comprising: a first layer of a closed cell foam of a thermoplastic material, a second layer of a fibre-reinforced resin, the resin adhering a surface of the second layer to a surface of the first layer, wherein the closed cell foam is composed of a blend of polystyrene and polyphenylene oxide (PS/PPO) having a density of from 50 to 250 g/litre.

The present inventors have found that a high density PS/PPO closed cell foam can be provided in a composite laminated article to achieve high mechanical properties.

There is also disclosed herein a method of making a composite laminated article, the method comprising the steps of: (a) providing a plurality of pellets comprising a thermoplastic material and a blowing agent; (b) expanding the pellets in a mould to form a closed cell foam of the thermoplastic material, wherein the closed cell foam has a moulded surface formed by a surface of the mould; (c) disposing a layer including fibre-reinforement adjacent to the moulded surface; and (d) adhering a surface of the layer to the moulded surface by a resin, the resin comprising a resin matrix of a fibre-reinforced layer comprising the fibre-reinforcement and the resin matrix.

The present inventors have found that a closed cell foam can be moulded directly to form a moulded surface to which a fibre-reinforced layer is subsequently adhered by the resin thereof. This avoids the need for machining or shaping of the foam surface after the foam body has been formed and before the fibre-reinforced layer has been adhered. By adhering the fibre-reinforced layer directly to the moulded surface, wastage of foam material is significantly reduced, or even eliminated.

There is also disclosed herein a method of producing a closed cell foam body composed of a blend of polystyrene and polyphenylene oxide (PS/PPO), the method comprising the steps of: (a) providing a plurality of pellets comprising a blend of polystyrene and polyphenylene oxide (PS/PPO) and a blowing agent; (b) expanding the pellets to form a plurality of beads of closed cell foam, the beads having a first density and containing at least a portion of the blowing agent; and (c) fusing the beads together in pellets in a mould at elevated temperature and elevated pressure to form a closed cell foam moulded body having a second density higher than the first density.

Preferably, in step (b) the pellets are expanded in the presence of steam. Preferably, in step (c) the beads are fused together in the presence of steam. Preferably, in step (c) the elevated pressure is from 1 to 5 bar, more preferably from 3 to 5 bar, and/or the elevated temperature is from 150 to 220 degrees Centigrade.

Preferably, in the closed cell foam moulded body the beads have an average bead size of from 2 to 4 mm.

Preferably, the blend of polystyrene and polyphenylene oxide (PS/PPO) comprises from 20 to 70 wt % PPO.

The closed cell foam moulded body preferably has a density of from 50 to 250 g/litre.

It has been found that to produce foams with improved mechanical and thermal properties and at higher densities, the unexpanded pellets of PS/PPO need to be formulated with a level of blowing agent so that the pre-expanded foam beads contain residual blowing agent. Thereafter, in the final moulding step, the residual blowing agent causes further expansion of the bead and then is released which aids fusion of the beads together to form the final moulded body. Preferably, the initial unexpanded pellets of PS/PPO contain interrelated levels of both PPO and blowing agent to achieve the desired level of bead fusion in the final moulding and avoid excessive residual gas within the foam.

As with standard expanded polystyrene foam (EPS) production the unexpanded PS/PPO pellets are expanded using a steam expansion chamber to form pre-expanded PS/PPO beads at a density less than the final desired foam density. The pre-expanded beads of PS and PPO can be moulded and fused into a rigid foam using a steam injection press moulding machine provided that a sufficient level of blowing agent remains within the bead and sufficient heat, pressure and time is allowed in the moulding cycle. Due to the higher thermal resistance of the PS/PPO, this foam is preferably moulded in higher pressure moulding machines (up to 5 bar) such as those commonly used for moulding EPP (Expanded Polypropylene) and EPE (Expanded Polyethylene) foam articles.

When correctly fused this results in a closed cell foam with high heat resistance, fine cell structure and high specific mechanical properties. These EPS/PPO foams then become highly suitable for manufacturing sandwich panels with fibre reinforced epoxy resins.

Embodiments of the invention will now be described, by way of example only, with reference to the accompanying drawings, in which:
Figure 1 illustrates a cross-sectional view of a composite laminated article in accordance with an embodiment of the present invention;
Figure 2 illustrates an enlarged cross-sectional view the closed cell foam of the composite laminated article of Figure 1;
Figure 3 is a micrograph of a closed cell foam produced in accordance with an Example of the present invention;
Figure 4 is a scanning electron micrograph of the closed cell foam of Figure 3;
Figure 5 is a micrograph of a known foam used in composite laminates;
Figure 6 is a micrograph of a closed cell foam produced in accordance with an Example of the present invention and
Figure 7 is a micrograph of a foam produced in accordance with a Comparative Example.

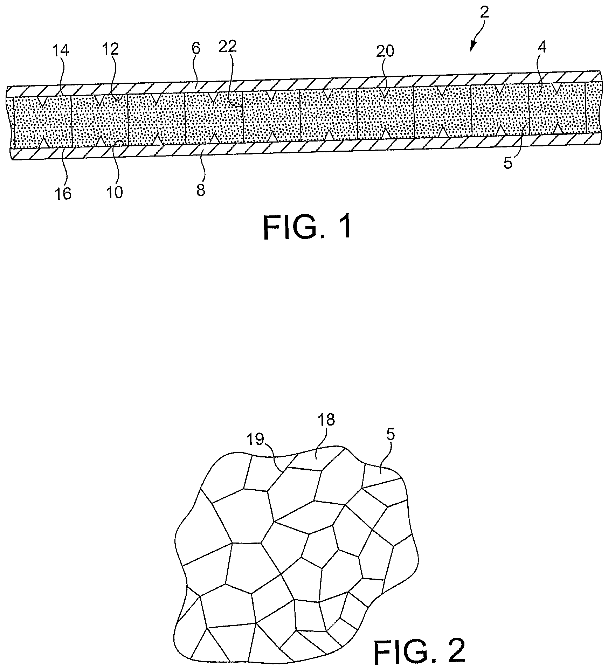

Referring to Figure 1, there is provided a composite laminated article in accordance with a first embodiment of the present invention.

The composite laminated article 2 is a sandwich structure comprising: a central core layer 4 of a closed cell foam 5 of a thermoplastic material, and two outer layers 6, 8 of a fibre-reinforced resin, the resin adhering a respective inner surface 10, 12 of each outer layer 6, 8 to a respective outer surface 14, 16 of the central core layer 4.

Referring to Figure 2, the closed cell foam 5 comprises a plurality of expanded beads 18 mutually bonded together along bead interfaces 19. Each bead 18 comprises a plurality of closed cells. The closed cell foam 5 has an average cell size of from 15 to 75 microns. Typically less than half of the beads in a planar section contain larger cells. These larger cells are on average 200 to 440 microns in diameter. On average the beads that contain the larger cells have on average 2 large cells visible within the bead when viewing a planar section through the foam.

The cell and bead size was determined using the cell wall intercept methodology similar to that used in ASTM 112 for determining crystal grain size in crystalline metals. The cell sizes are measured as a cell diameter when viewed as a planar section through the closed cell foam.

The beads have an average bead size of from 2 to 4 mm. The beads are well fused together to minimise the size and number of welding defects between the beads. Such a combination of cell size and bead size can provide the required mechanical properties for the foam.

The central core layer 4 may be provided with a plurality of grooves 20 in one or both of the outer surfaces 14, 16 of the central core layer 4. In addition, one or more conduits 22 may be provided through the thickness of the central core layer 4. Such grooves 20 act as resin flow channels and enable even distribution of resin over the surfaces 14, 16 of the core layer 4 when the resin of the outer layers 6, 8 is introduced into the fibre-reinforcement by a resin infusion process. Correspondingly, the conduits 22 through the central core layer 4 permit substantially equal distribution of resin over the two opposite surfaces of the core layer 4 when the resin of the outer layers 6, 8 is introduced into the fibre-reinforcement by a resin infusion process, because the conduits equalise fluid pressure on the opposite sides of the core layer 4.

Alternatively, when the outer layers 6, 8 are formed from pre-pregs and the resin is present initially in the outer layers 6, 8, the grooves 20 and conduits 22 may be omitted. In the preferred embodiment, the closed cell foam is composed of a blend of polystyrene and polyphenylene oxide (PS/PPO). The PS/PPO closed cell foam has a density of from 50 to 250 g/litre, more preferably from 50 to 100 g/litre. The blend of polystyrene and polyphenylene oxide (PS/PPO) comprises from 20 to 50 wt% polyphenylene oxide, more preferably from 25 to 35 wt% polyphenylene oxide.

The closed cell foam 5 of PS/PPO may be made by a pre-expanded steam moulding process that is known per se in the art, described hereinbelow.

The closed cell PS/PPO foam used in a composite laminate sandwich panel of an embodiment of the present invention preferably comprises from 20-70% by weight PPO added to PS, and preferably has a density of from 50-250g/L. A particularly preferred closed cell PS/PPO foam has a density of from 50-160g/L and comprises from 20-50% by weight PPO in PS. A particular closed cell PS/PPO foam has a density of from 50-100g/L and comprises from 25-35% by weight PPO in PS.

As a rule, the Tg of a PS/PPO foam tends to increase with increasing PPO content. A typical polystyrene (PS) has a Tg of about 93 °C and for PS/PPO compositions based on that typical PS, the relationship between the PPO content and Tg is typically as follows:

| %PPO | Tg |
|---|---|
| 0 | 93 |
| 10% | 98 |
| 20% | 104 |
| 30% | 110 |
| 40% | 116 |
| 50% | 121 |
| 60% | 127 |
| 70% | 133 |
| 80% | 139 |
| 90% | 144 |

Preferably the PPO content of the PS/PPO foams used in the preferred embodiments of the present invention is controlled to provide a minimum PPO content of 20 % to provide the required combination of enhanced mechanical properties and thermal resistance as compared to PS foam.

Preferably the PPO content of the PS/PPO foams used in the preferred embodiments of the present invention is controlled to provide a maximum PPO content of 70 % to provide the required combination of enhanced mechanical properties and thermal resistance as compared to PS foam without encountering foam manufacturing problems, in particular difficulty in fusing foams beads together. A more preferred maximum PPO content is 50 % which generally provides the required foam properties at reasonable production cost, given that PPO is a more expensive component than PS.

Closed cell PS/PPO foams having a PPO level of typically up to 40% by weight PPO in PS are compatible with fibre-reinforced resin outer layers for which the resin has a curing temperature of 75°C, exemplified by the Applicant's commercially available resins sold as Gurit ST70 and Gurit SE70 for the Gurit SPRINT and pre-preg resin systems, and room curing wet-laminating and infusion resin systems such as Gurit Ampreg and Gurit Prime. "Gurit" and "SPRINT" are registered trade marks.

Closed cell PS/PPO foams having a higher PPO level of typically from 40-70% by weight have a higher thermal resistance and are compatible with fibre-reinforced resin outer layers for which the resin has a curing temperature of 90°C to 120°C, exemplified by the Applicant's commercially available resins sold as Gurit SE85, Gurit ST95, and Gurit WE90 for prepreg and SPRINT materials. "Gutit" and SPRINT are registered trade marks.

The Tg of the foam needs to be higher for higher temperature processing that may be required during manufacture of the composite material, in particular during curing of the resin of the adjacent fibre-reinforced resin composites. The Tg of the foam can be increased by increasing the PPO amount in the foam. The higher Tg and thermal resistance also are useful for infusion processing, since the foam can withstand exothermic temperatures developed by thicker laminates and the mould/cure temperature can be increased to achieve a faster curing cycle.

The PPO also offers increased chemical resistance to the foam. Some diluented epoxy resin infusion systems can attack EPS foam, whereas the EPS/PPO foam tends to be chemically unaffected by exposure to the epoxy resin used in fibre-reinforced composite materials.

However, at particularly high PPO levels, generally 70 wt% PPO or above, in particular 80wt % PPO or above, it becomes difficult to fuse the pre-expanded beads together in a conventional steam moulding machine. The potential structural properties of the material are not obtained and on increasing the level of PPO further the structural properties plateau and then reduce due to poor levels of fusion between the beads.

In embodiments of the present invention a PS/PPO foam is used within a fibre reinforced epoxy composite structure, typically a sandwich structure, the foam having been made either by direct extrusion or more preferably using a pre-expanded foam and moulding process. The level of PPO has been selected to achieve the required combination of thermal resistance and mechanical properties for the foam. During the manufacture of unexpanded beads of PS/PPO, in order to produce foam by the pre-expanded foam process, sufficient blowing agent is added, and the manufacturing process is controlled, to produce a fully fused foam in order to maximise the material properties of the fused-bead foam. Kitted foam parts may be moulded from pre-expanded beads directly, as opposed to post-machining of the foam to form kitted parts, which can reduce the cost and waste associated with assembling complex, larger composite components.

In accordance with the preferred embodiments, the foam can have a density within the range of from 50-250g/L at a core thickness of from 3 to 200mm, although higher thicknesses may be achieved. For lightweight composite parts, the foam core density is more preferably from 50-150g/L in combination with a 3 to 100mm core thickness.

In one embodiment, the foam is produced according to the following process.

A molten polymer feedstock is fed into an extruder provided with a gas injection stage to dissolve blowing agent gas, typically pentane, into the melt. The molten polymer exits the extruder die and is chilled, and is then chopped into fine grains to form unexpanded granules. The granules have a texture and size similar to dried sand with a typical diameter of 0.5 to 1.8mm. The unexpanded granules are then either packaged and sent to a remote site, or moved into a local holding silo. Depending on the polymer, there is a shelf life before the blowing agent (pentane) is lost through diffusion.

In one embodiment, a twin screw extruder is used to disperse and mix together carbon black (as both a foam nucleating agent and a pigment), polyphenylene oxide (PPO) and polystyrene (PS) as a melt at elevated temperature. A typical extrusion temperature is from 220 to 250 degrees Centigrade. A particularly preferred polymer composition comprises 72 wt% polystyrene and 28 wt% polyphenylene oxide. Such a polymer composition is available in commerce under the trade name Noryl ® EF from GE Plastics, The Netherlands or under the trade name Suncolor ® PPE from Sunpor Kunststoff GmbH, Austria. Then, as blowing agent, 5 wt% pentane is dissolved into the melt. The nucleating agent, in the form of carbon black, is present in a sufficient amount, typically about 0.5 wt%, and in a sufficiently small particle size, to achieve a high level of foam cell nucleation in the subsequent foaming process.

The melt is then cooled and solidified, and chopped to form 0.6 to 1.8mm diameter granules.

To manufacture pre-expanded foam beads, the unexpanded material is then conveyed to a pre-expansion chamber. Typically the polymer is pre-expanded to achieve a density which is from 5-10 Kg/m3 below the ultimate target density for the foam, this preliminary expansion step using steam injection to soften the polymer to allow the residual blowing gas inside the polymer to expand the granules into low density beads. The majority of the residual blowing agent is removed in this pre-expansion step.

The granules are pre-expanded to form the pre-expanded foam beads using a conventional pre-expansion chamber for forming pre-expanded foam beads. The foam beads are expanded to a density value which is from 5 to 10g/L below a target density for the ultimate moulded foam product. To achieve a typical density value of about 80g/L in the final moulded foam, the pre-expansion would typically carried out at a pressure of about 0.25 bar for a period of about 60 seconds, depending on the pre-expander and the final density. Different pre-expander units may require different cycle settings which can be determined by lowering the pressure to increase the pre-expanded density.

The beads are transported and held in holding silos to dry.

Finally, the pre-expanded beads are transported into a final mould and pressurised steam is injected to give final expansion to fill the mould and weld the beads together, typically 5 bar, using a conventional press moulding machine for moulding PS/PPE foam products. To maintain a sufficiently blowing agent (pentane) level to fuse the foam beads together, the beads should be used within 4 days of their manufacture. The residence time within the mould may vary from a lower level of about 30 to 60 seconds to a higher level of about 2 to 3 minutes depending on the thickness of the moulded foam product.

The residual blowing agent (pentane) now provides the pressure to give a sufficient fusion weld between the beads. Usually a vacuum cycle is used to remove volatiles and cool the foam. This can either be done in the same mould as the steam injection or the foam can be injected and conveyed to second vacuum cooling mould to speed up the cycle time. After cooling the moulded parts are ejected from the mould and conveyed to a holding zone. An optional heat treatment (typically 2hrs at 70°c) may be used to remove any remaining volatiles.

It is known in the art that adding PPO to polystyrene improves the thermal resistance and mechanical properties of the foam. However, if the PPO level is too high then the mechanical performance can be degraded because there is insufficient fusing of the beads together. Conversely, if the PPO level is too low, then the thermal resistance and mechanical performance can be degraded.

To achieve higher mechanical properties and lower resin absorption a homogonous fine cell size is required, as discussed hereinabove. The use of standard nucleating agents and pigments such as carbon black can assist the desired cell formation.

The pre-expanded foam moulding process provides the ability to mould foam shapes and moulded blocks directly to a desired foam thickness, In this process, the final foam Tg and PPO levels are limited by the ability to fuse the pre-expanded beads together.

The PS/PPO foam of the present invention is suitable for all fibre reinforced epoxy manufacturing methods, for example, open moulding, VARTM (Vacuum Assisted Resin Transfer Moulding), RTM (Resin Transfer Moulding), pre-preg moulding and moulding using the Applicant's SPRINT resin-impregnated composite materials.

The PS/PPO foam having a density of from 50-100g/L may be used for in accordance with the present invention for manufacturing composite parts made with low temperature, less than 75°C, curing fibre reinforced epoxy pre-preg and SPRINT composite materials.

The present invention enables the use of unexpanded PS/PPO beads to be used to manufacture foams at higher densities so as to be suitable for composite parts made with such low temperature curing fibre reinforced epoxy pre-preg and SPRINT composite materials. By modifying the level of pentane, or other blowing agent, in the unexpanded PS/PPO pellets, this can make the PS/PPO more suitable for higher density foam production, having a density of from 100g/L to 250g/L, with high mechanical and thermal properties. Further, by modifying the level of PPO, this can increase the thermal resistance of the foam to make it more suitable to use with high temperature curing fibre reinforced epoxy pre-preg and SPRINT composite materials, having curing temperatures of from typically 75°C to 120°C.

The preferred embodiments of the present invention provide a number of advantages over known foam-core composites and manufacturing processes therefor.

By directly moulding a foam core, this can reduce the cost to manufacture a structural foam by achieving lower material waste and a simplified manufacturing process. The foam can provide high mechanical properties at a given foam density. The preferred PS/PPO foams are highly compatible with epoxy resins that are used in fibre-reinforced composite materials. The preferred PS/PPO foams can provide sufficient heat stability and creep resistance to enable high temperature pre-preg materials to be cured while in contact with the foam without encountering foam collapse during processing, and after manufacture if the composite is exposed to high in-service temperatures. The preferred PS/PPO foams provide sufficient heat stability and creep resistance for the foam to be able to withstand the exothermic temperatures generated when curing thicker laminates made using open moulding, VARTM (Vacuum Assisted Resin Transfer Moulding), and RTM (Resin Transfer Moulding) processes. The preferred PS/PPO foams can also provide sufficient heat stability for the foam to enable higher cure temperatures to be used to cure parts manufactured from open moulding, VARTM (Vacuum Assisted Resin Transfer), RTM processes more quickly. The preferred PS/PPO foams provide a foam that is recyclable as it is 100% thermoplastic.

The provision of a closed cell foam having a small cell size can reduce the amount of resin absorbed by the core during processing, which can enable less overall resin to be used in the sandwich production process. This can save material cost and reduce the final component weight.

By directly moulding a foam core, thicker foam sections with uniform density can be produced. This can avoid the need to adhere separate sheets of thinner foam together for thicker sandwich panel laminates. For example, some known foams for use in composite materials have a maximum thickness of about 50mm, whereas the preferred PS/PPO foams may be significantly thicker, for example up to at least 200mm. When using known foams, it has been found that significant weight is added to bond together the thinner foam sheets using additional resin layers. For example, typically at least a 400g/m² epoxy resin adhesive resin film is used to bond two sheets of known Coxecell® SAN foam together to form a thicker foam core.

When the preferred PS/PPO foams are produced using unexpanded beads which are then expanded directly into moulds having the desired shape and dimensions, this can provide the further advantage of savings in transportation costs and plant expansion costs. The high density unexpanded PS/PPO beads can be supplied to existing foam moulders to produce foam at geographical locations closer to large composite component manufacturers. This can reduce the capital investment to set-up new foam production and reduces the cost of transporting foam globally.

The preferred embodiments of the present invention can provide a number of advantages over known composite foam sandwich structures. First, this can provided reduced process and material costs. Second, high structural properties can be achieved. Third, lower resin absorption can be achieved, which can reduce overall component weight and cost. Accordingly, while the structural properties of the foam itself may not be as high as some PVC foam used as a core layer in composites, since the amount of resin required to be used to bond the foam core is reduced, the mechanical properties vs density can then exceed market leading PVC foams, and this can be a major technical benefit, as well as the core itself being cheaper to manufacture. Fourth, transportation and plant expansion cost savings can be achieved. The high density unexpanded beads can be supplied to existing foam moulders to produce foam at geographical locations closer to large composite component manufacturers. This reduces the capital investment to set-up new foam production and reduces the cost of transporting foam globally.

The present invention will now be described further with reference to the following nonlimiting examples.

### Example 1

A 110°C Tg PS/PPO blend, having a PPO content of from 25 to 35 wt%, with a pentane blowing agent content of 5 wt% was provided as pellets. The pellets were pre-expanded using a steam injection process to form beads 2-4mm in diameter. The beads where then moulded into a rigid closed cell foam at 5 bar to give a 69g/L foam with an average bead diameter of 3.2mm. The pre-expansion and moulding process produced a homogonous foam with the majority of beads being formed of fine closed cells that were 36 microns in diameter. When a section through the foam was observed 66% of the beads were formed from only fine cells. The remaining 34% of the beads, on average, contained only 2 larger cells with an average diameter of 0.26mm. The number and size of cavities between the beads was such that 1 small welding void was formed for every 9 beads. A high level of fusion between the beads had occurred as when attempting to separate individual beads failure occurred within the beads and not just in the weld zones.

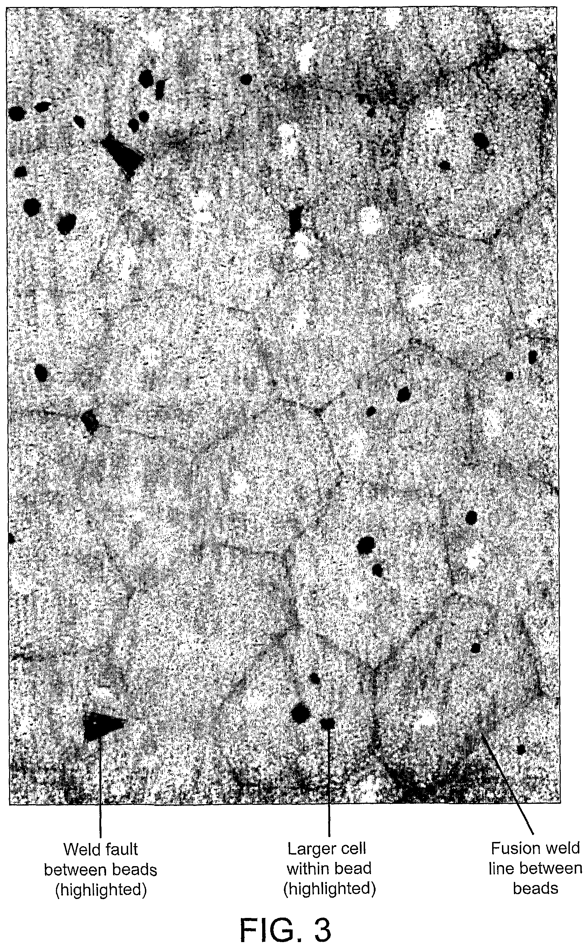

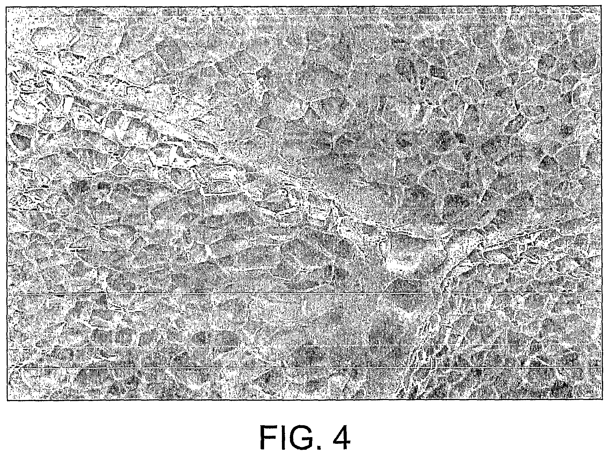

Figure 3 is a micrograph of the resultant foam structure. The foam is composed of beads mutually fused together along weld lines between the beads (which were on average 3.2 mm in size (which may be expressed as a diameter). It may be seen that there are only a few weld faults between the beads, which are highlighted in the micrograph. Also, within the beads there are only a few enlarged cells. The enlarged cells are highlighted in the micrograph, and are significantly larger than the fine closed cells that have a size that is too small to be distinguishable in the micrograph and would require analysis using a scanning electron microscope to resolve the cell detail. Figure 4 is a scanning electron micrograph of the closed cell foam of Figure 3. The fine cells and the beads, and the weld lines between the beads, can be seen.

When compared to a styrene acrylonitrile (SAN) foam, commercially available under the trade name of T-grade Corecell, and well known for use as a core layer in composite material, at the equivalent density this foam had superior mechanical properties;

| | |
|---|---|
| Shear strength /Mpa BS ISO 1922: 2001 | +11% |
| Shear modulus /Mpa BS ISO 1922: 2001 | +10% |
| Compressive strength /Mpa ISO844 | +19% |

This foam was then employed as a core foam layer in a sandwich composite between opposite outer fibre-reinforced composite layers and infused with Gurit epoxy Prime 20LV plus slow hardener using a VARTM process. The epoxy resin amount absorbed by the exposed surface cavities in the core and to bond the outer fibre-reinforced composite layers securely to the inner central core layer was about 120g/m2 for each face of the central core layer.

The foam detailed in this Example can be pre-made to the required dimensions, thereby minimising weight, material waste, and avoiding the need for additional bonding steps.

### Comparative Example 1

A styrene acrylonitrile (SAN) foam, commercially available under the trade name of Corecell and well known for use as a core layer in composite material, having an average cell size of about 0.6 mm was employed as a core foam layer in a sandwich composite between the same opposite outer fibre-reinforced composite layers including epoxy resin as were used in Example 1.

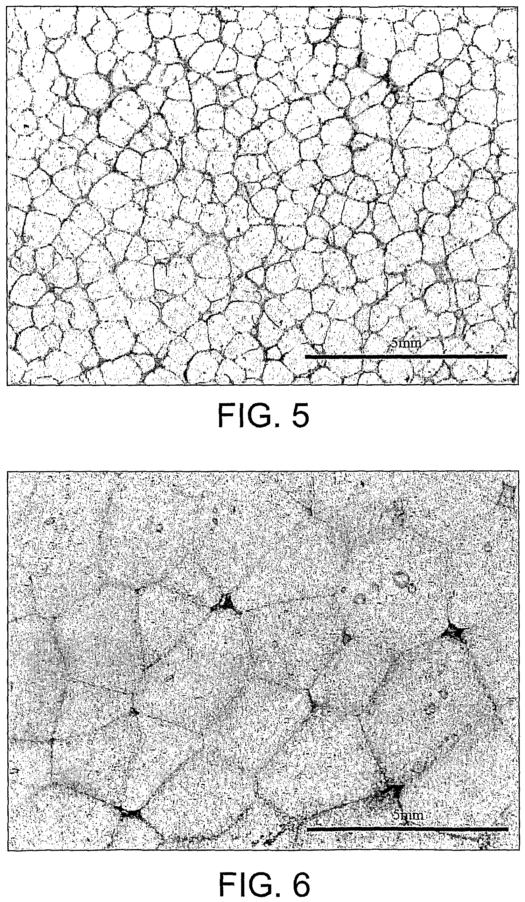

Figure 5 is a micrograph of the foam structure. The foam is composed of relatively large cells mutually abutting together along cell boundaries. In contrast, Figure 6 is a micrograph of the foam structure of Example 1 to the same scale, where the cells are too small to be seen but the mutually fused beads can be seen.

The epoxy resin amount absorbed by the core and to bond the outer fibre-reinforced composite layers securely to the inner central core layer was about 500g/m2 for each face of the central core layer.

The reduced resin absorption achieved by Example 1 as compared to Comparative Example 1 is a significant technical advantage. To give the same overall panel weight as the foam in Example 1 for a 25mm core thickness a lighter 54 g/L Corecell T grade foam would need to be used. In this case the foam of Example 1 would have a 59% increase in shear strength for the same overall panel weight.

The effect is more significant at thinner core thickness. With a 10mm core thickness a 31g/L Corecell T grade foam would be required for the same overall panel weight and then the foam in Example 1 would have a 250% increase in shear strength.

At 50mm core thickness a 61g/L Corecell foam would be required for the same equivalent weight and then the foam in Example 1 would have over 32% increase in shear strength.

### Comparative Example 2

A 100% PS foam with a pentane blowing agent content of 5 wt% was provided as pellets. The pellets were pre-expanded using a steam injection process. The beads where then moulded into a rigid closed cell foam at 1.2 bar to give a 50g/L foam with an average bead diameter of 3.8mm. The beads lacked the finer cells and the majority of the cells forming the beads having an average diameter of 0.24mm. The moulding process did not produce a fully homogonous foam with voids formed at bead intersections where the beads had not expanded sufficiently to all the cavities such that at least 90% of all beads had a small welding void.

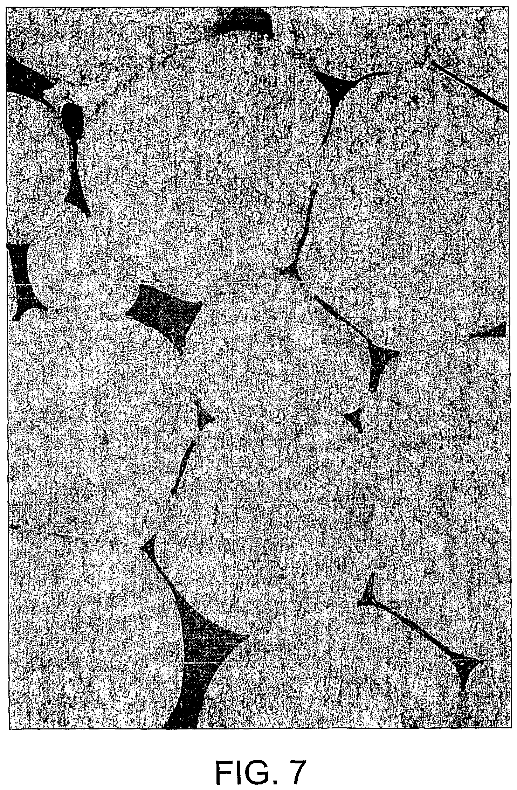

Figure 7 is a micrograph of the resultant foam structure. The foam is composed of beads mutually fused together along weld lines between the beads (which were on average 3.8 mm in size (which may be expressed as a diameter). It may be seen that there is a high number of weld faults between the beads, which are highlighted in the micrograph. The weld faults appeared as cracks and voids between the beads, and the voids had a typical size of 0.9 mm. The walls of the beads appear substantially solid and independent, with poor interbead fusion. Also, within the beads there are only a relatively large cells, having an average size (which may be expressed as a diameter) of 0.24mm. The enlarged cells are highlighted in the micrograph, and are significantly larger than the fine closed cells that have a size that is too small to be distinguishable in the micrograph. The cell structure is consistently formed of such large cells, as compared to the foam of Example 1 which consists of a large number of significantly finer cells, about an order of magnitude smaller, with only a few larger cells existing as cell defects.

This foam was employed as a core foam layer in a sandwich composite between opposite outer fibre-reinforced composite layers including epoxy resin. The epoxy resin amount absorbed by the core and to bond the outer fibre-reinforced composite layers securely to the inner central core layer was about 680g/m2 for each face of the central core layer due to the presence of the larger cells and welding defects. Some softening was observed due to the lower thermal and chemical resistance of the foam.

### Comparative Example 3

A 150mm thick Corecell T-400 (70g/L) styrene acrylonitrile (SAN) foam was required to form a composite panel. The maximum commercially available sheet thickness, available from the Applicant Gurit, was 38mm. Accordingly, four foam sheets were stacked together and adhered by epoxy resin interlayers. Three 400g/m2 epoxy resin adhesive films were used to pre-join the four sheets of the core and then the stack was sanded back to achieve the desired thickness for the composite panel of 150mm. This increased the final core weight by 10% to 77g/L, as compared to a single 150 mm thick sheet, but without an increase in shear strength. Shear elongation was reduced.

### Example 2

The foam produced in Example 1 was then employed as a core foam layer in a sandwich composite between opposite outer fibre-reinforced composite layers made from a glass fibre pre-preg material (in particular a pre-preg sold by Gurit under the trade name SPRINT comprising ST70 epoxy resin and glass fibre). The pre-preg material of the sandwich was cured using vacuum bag processing using the following cure cycle - heat from room temperature at a rate of 0.5degC/min to 60degC, maintain at that temperature for a dwell period of 2 hours, heat at a rate of 0.3degC/min to a temperature of 75degC, maintain at that temperature for a dwell period of 16 hours.

No additional adhesive film or any increase in the SPRINT pre-preg resin content was required in the pre-preg material to bond the outer fibre-reinforced composite layers to the foam core. On curing the laminate, sufficient resin remained in the fibre reinforced laminate portions.

### Comparative Example 4

The styrene acrylonitrile (SAN) foam described in Comparative Example 1 was employed to make a sandwich similar to that of Example 2, using the same Gurit epoxy ST70 glass fibre SPRINT pre-preg material, but with a different foam core.

Resin was absorbed by the foam core leading to insufficient resin remaining in the fibre reinforced laminate portions.

To give acceptable resin levels in the fibre reinforced laminate portions a 250g/m2 Gurit SA70 epoxy resin adhesive film was first applied to each side of the core material to maintain an adequate bond to the outer fibre-reinforced composite layers and prevent the core removing excess resin from the Gurit epoxy ST70 glass fibre SPRINT pre-preg layers.

## Claims

1. A composite laminated article comprising: a first layer of a closed cell foam of a thermoplastic material, and a second layer of a fibre-reinforced resin, the resin adhering a surface of the second layer to a surface of the first layer, wherein the closed cell foam has an average cell size, the cell size being substantially homogeneous in the closed cell foam, of less than 100 microns.

2. A composite laminated article as claimed in Claim 1 wherein the closed cell foam has an average cell size of from 15 to 75 microns.

3. A composite laminated article as claimed in Claim 1 or claim 2 wherein the closed cell foam comprises a plurality of expanded beads mutually bonded together, each bead comprising a plurality of closed cells, optionally wherein the beads have an average bead size of from 2 to 4 mm.

4. A composite laminated article as claimed in any foregoing Claim wherein the closed cell foam is composed of a blend of polystyrene and polyphenylene oxide (PS/PPO), optionally wherein the PS/PPO closed cell foam has a density of from 50 to 250 g/litre.

5. A composite laminated article as claimed in any foregoing Claim wherein the fibre-reinforced resin includes epoxy resin.

6. A composite laminated article as claimed in any foregoing Claim further comprising a further second layer of a fibre-reinforced resin, and wherein the first layer is sandwiched between the two second layers.

7. A method of making a composite laminated article, the method comprising the steps of:
(a) providing a first layer of a closed cell foam of a thermoplastic material, wherein the closed cell foam has an average cell size, the cell size being substantially homogeneous in the closed cell foam, of less than 100 microns;
(b) disposing a second layer including fibre reinforcement adjacent to the first layer; and
(c) adhering a surface of the second layer to a surface of the first layer by a resin, the resin comprising a resin matrix of a fibre-reinforced layer comprising the fibre-reinforcement.

8. A method as claimed in Claim 7 wherein the closed cell foam has an average cell size of from 15 to 75 microns.

9. A method as claimed in Claim 7 or Claim 8 wherein in step (c) the resin is infused into the fibre-reinforcement of the second layer and into an interface between the first and second layers, optionally wherein the first layer comprises a plurality of channels in the surface of the first layer at the interface between the first and second layers along which channels the infused resin flows in step (c).

10. A method as claimed in Claim 7 wherein the second layer is a pre-preg and the resin is present in the second layer.

11. A method as claimed in any one of Claims 7 to 10 further comprising providing a further second layer of a fibre-reinforced resin, and wherein the first layer is sandwiched between the two second layers.

12. A method as claimed in any one of Claims 7 to 11 wherein the closed cell foam comprises a plurality of expanded beads mutually bonded together, each bead comprising a plurality of closed cells, optionally wherein the beads have an average bead size of from 2 to 4 mm.

13. A method as claimed in any one of Claims 7 to 12 wherein the closed cell foam is composed of a blend of polystyrene and polyphenylene oxide (PS/PPO), optionally wherein the PS/PPO closed cell foam has a density of from 50 to 250 g/litre.

14. A method as claimed in any one of Claims 7 to 13 wherein the fibre-reinforced resin includes epoxy resin.

## Patentansprüche

1. Schichtverbundartikel, der Folgendes aufweist: eine erste Schicht aus einem geschlossenzelligen Schaumstoff aus einem Thermoplastmaterial und eine zweite Schicht aus einem faserverstärkten Kunstharz, wobei das Kunstharz eine Oberfläche der zweiten Schicht an eine Oberfläche der ersten Schicht klebt, wobei der geschlossenzellige Schaumstoff eine durchschnittliche Zellgröße hat, die Zellgröße von weniger als 100 Mikrometer in dem geschlossenzelligen Schaumstoff dabei im Wesentlichen homogen ist.

2. Schichtverbundartikel nach Anspruch 1, wobei der geschlossenzellige Schaumstoff eine durchschnittliche Zellgröße von etwa 15 bis 75 Mikrometer hat.

3. Schichtverbundartikel nach Anspruch 1 oder Anspruch 2, wobei der geschlossenzellige Schaumstoff mehrere expandierte Kügelchen aufweist, die miteinander verschweißt sind, wobei jedes Kügelchen mehrere geschlossene Zellen aufweist, wahlweise wobei die Kügelchen eine durchschnittliche Kugelgröße von 2 bis 4 mm haben.

4. Schichtverbundartikel nach einem der vorhergehenden Ansprüche, wobei der geschlossenzellige Schaumstoff eine Mischung aus Polystyrol und Polyphenylenoxid (PS/PPO) zusammengesetzt ist, wahlweise wobei der geschlossenzellige PS/PPO-Schaumstoff eine Dichte von 50 bis 250 g/Liter hat.

5. Schichtverbundartikel nach einem der vorhergehenden Ansprüche, wobei das faserverstärkte Kunstharz Epoxidharz beinhaltet.

6. Schichtverbundartikel nach einem der vorhergehenden Ansprüche, das ferner eine weitere zweite Schicht aus einem faserverstärkten Kunstharz aufweist und wobei die erste Schicht zwischen den zwei zweiten Schichten zwischengelegt ist.

7. Verfahren zum Herstellen eines Schichtverbundartikels, wobei das Verfahren die folgenden Schritte aufweist:
(a) Bereitstellen einer ersten Schicht eines geschlossenzelligen Schaumstoffs aus einem Thermoplastmaterial, wobei der geschlossenzellige Schaumstoff eine durchschnittliche Zellgröße hat, wobei die Zellgröße in dem geschlossenzelligen Schaumstoff im Wesentlichen homogen ist und weniger als 100 Mikrometer beträgt;
(b) Anordnen einer an die erste Schicht angrenzenden zweiten Schicht mit Faserverstärkung und
(c) Ankleben einer Oberfläche der zweiten Schicht an eine Oberfläche der ersten Schicht durch ein Kunstharz, wobei das Kunstharz eine Kunstharzmatrix einer faserverstärkten Schicht aufweist, die die Faserverstärkung aufweist.

8. Schichtverbundartikel nach Anspruch 7, wobei der geschlossenzellige Schaumstoff eine durchschnittliche Zellgröße von 15 bis 75 Mikrometer hat.

9. Verfahren nach Anspruch 7 oder Anspruch 8, wobei in Schritt (c) die Faserverstärkung der zweiten Schicht und eine Grenzfläche zwischen der ersten und der zweiten Schicht mit dem Kunstharz getränkt wird, wahlweise wobei die erste Schicht mehrere Kanäle in der Oberfläche der ersten Schicht an der Grenzfläche zwischen der ersten und der zweiten Schicht aufweist, wobei das eingebrachte Kunstharz in Schritt (c) an diesen Kanälen entlang fließt.

10. Verfahren nach Anspruch 7, wobei die zweite Schicht ein Faser-Matrix-Halbzeug ist und das Kunstharz in der zweiten Schicht vorhanden ist.

11. Verfahren nach einem der Ansprüche 7 bis 10, das ferner das Bereitstellen einer weiteren zweiten Schicht aus einem faserverstärkten Kunstharz aufweist und wobei die erste Schicht zwischen den zwei zweiten Schichten zwischengelegt wird.

12. Verfahren nach einem der Ansprüche 7 bis 11, wobei der geschlossenzellige Schaumstoff mehrere expandierte Kügelchen aufweist, die miteinander verschweißt sind, wobei jedes Kügelchen mehrere geschlossene Zellen aufweist, wahlweise wobei die Kügelchen eine durchschnittliche Kugelgröße von 2 bis 4 mm haben.

13. Verfahren nach einem der Ansprüche 7 bis 12, wobei der geschlossenzellige Schaumstoff aus einer Mischung aus Polystyrol und Polyphenylenoxid (PS/PPO) zusammengesetzt ist, wahlweise wobei der geschlossenzellige PS/PPO-Schaumstoff eine Dichte von 50 bis 250 g/Liter hat.

14. Verfahren nach einem der Ansprüche 7 bis 13, wobei das faserverstärkte Kunstharz Epoxidharz beinhaltet.

## Revendications

1. Article stratifié composite comprenant : une première couche d'une mousse à alvéoles fermées en matériau thermoplastique, et une seconde couche d'une résine renforcée par des fibres, la résine assurant l'adhérence d'une surface de la seconde couche à une surface de la première couche, la mousse à alvéoles fermées présentant une taille de cellule moyenne, la taille de cellule, inférieure à 100 microns, étant substantiellement homogène dans la mousse à alvéoles fermées.

2. Article stratifié composite selon la revendication 1, la mousse à alvéoles fermées présentant une taille de cellule moyenne comprise entre 15 et 75 microns.

3. Article stratifié composite selon la revendication 1 ou la revendication 2, la mousse à alvéoles fermées comprenant une pluralité de perles expansées adhérant mutuellement l'une à l'autre, chaque perle comprenant une pluralité de cellules fermées, en option les perles mesurant en moyenne de 2 à 4 mm.

4. Article stratifié composite selon une quelconque des revendications ci-dessus, la mousse à alvéoles fermées étant composée d'un mélange de polystyrène et d'oxyde de polyphénylène (PS/PPO), en option la mousse à alvéoles fermées en PS/PPO présentant une densité comprise entre 50 et 250 g/litre.

5. Article stratifié composite selon une quelconque des revendications ci-dessus, la résine renforcée par des fibres comprenant une résine époxy.

6. Article stratifié composite selon une quelconque des revendications ci-dessus, comprenant en outre une autre seconde couche de résine renforcée par des fibres, la première couche étant prise en sandwich entre les deux secondes couches.

7. Méthode de réalisation d'un article stratifié composite, la méthode comprenant les étapes suivantes :
(a) réalisation d'une première couche d'une mousse à alvéoles fermées en matériau thermoplastique, la mousse à alvéoles fermées présentant une taille de cellule moyenne, la taille de cellule, inférieure à 100 microns, étant substantiellement homogène dans la mousse à alvéoles fermées.
(b) disposition d'une seconde couche comprenant un renforcement par des fibres, adjacente à la première couche ; et
(c) adhérence d'une surface de la seconde couche à une surface de la première couche par une résine, la résine comprenant une matrice de résine d'une couche renforcée par des fibres comprenant le renforcement par des fibres.

8. Méthode selon la revendication 7, la mousse à alvéoles fermées présentant une taille de cellule moyenne comprise entre 15 et 75 microns.

9. Méthode selon la revendication 7 ou la revendication 8, au point (c) la résine étant infusée dans le renforcement par fibres de la seconde couche, et dans une interface entre les première et seconde couches, en option la première couche comprenant une pluralité de canaux dans la surface de la première couche à l'interface entre les première et seconde couches, le long de laquelle s'écoule la résine infusée à l'étape (c).

10. Méthode selon la revendication 7, la seconde couche étant un pré-imprégné et la résine étant présente dans la seconde couche.

11. Méthode selon une quelconque des revendications 7 à 10, comprenant en outre la mise en place d'une seconde couche de résine renforcée par des fibres, la première couche étant prise en sandwich entre les deux secondes couches.

12. Méthode selon une quelconque des revendications 7 à 11, la mousse à alvéoles fermées comprenant une pluralité de perles expansées adhérant mutuellement l'une à l'autre, chaque perle comprenant une pluralité de cellules fermées, en option les perles mesurant en moyenne de 2 à 4 mm.

13. Méthode selon une quelconque des revendications 7 à 12, la mousse à alvéoles fermées étant composée d'un mélange de polystyrène et d'oxyde de polyphénylène (PS/PPO), en option la mousse à alvéoles fermées en PS/PPO présentant une densité comprise entre 50 et 250 g/litre.

14. Méthode selon une quelconque des revendications 7 à 13, la résine renforcée par fibres comprenant une résine époxy.
